# EUROPEAN PATENT SPECIFICATION

(11) **EP 0 843 162 B1**
(45) Date of publication and mention of the grant of the patent: **21.03.2007**
(21) Application number: 97309076.4
(22) Date of filing: 12.11.1997
(51) Int. Cl.: G01F 23/14, G01N 35/10

(54) **Determining liquid volumes in cup-like vessels being positioned on a rotor having a run-out in vertical direction**
Bestimmung von Flüssigkeitsvolumen in becherförmigen Probenbehältern, die sich auf einem Rotor befinden, der ein Spiel in vertikaler Richtung aufweist
Détermination du volume de liquide dans des récipients en forme de gobelets placés sur un rotor ayant und déviation en direction verticale

(30) Priority: 13.11.1996 US 747878; 13.11.1996 US 748306
(43) Date of publication of application: 20.05.1998
(73) Proprietor: ORTHO-CLINICAL DIAGNOSTICS, INC., Rochester, New York 14650-0868 (US)
(72) Inventor: Riall, James Daniel, Pittsford, New York 14534 (US); Hyde, David Donald, Ontario, New York 14519 (US)
(74) Representative: Mercer, Christopher Paul

(56) References cited:
- US-A- 4 794 085
- US-A- 5 013 529
- US-A- 5 133 392
- US-A- 5 270 210
- US-A- 5 443 791
- US-A- 5 443 792

## Description

This invention relates to a method and apparatus for verifying the vertical location of cup-like vessels on a rotor in an analyzer, and for thereby ascertaining the actual amount of liquid that ends up being placed in such containers.

It is known in wet assay analyzers, to determine the volume of liquid in a container by calculating the bottom height of an empty container from a reference surface, filling the container, sensing the height of the liquid-air interface of the filled container, and calculating the volume from the differences in height. This is taught, for example, in US-A-5,443,791, column 8, lines 44-47, wherein noncontact capacitance sensing is used. However, in this case a gauge block 24 "in one corner of the work area", column 9, lines 3-4, is the basis for an a priori assignment of the height of the bottom of the empty container. Lines 11-14 state that all stations are accurately registered with respect to the work surface and gauge block, allowing an assumption to be made that the height of the bottom of the empty container never varies.

In systems using rotors to mount the containers, the aforesaid assumption may turn out to be invalid. Indeed, in rotor type analyzers such as those taught for the analyzers of US-A-5,244,633 or US-A-5,270,210, vertical run-out can occur so that the height of the bottom of an empty container can easily vary, container to container, even if that height is sensed at a singular fixed circumferential position passed by the rotor. Hence, in such a case, merely sensing the height of the liquid after the container is filled, gives no assurance of the volume of the liquid. Such volumes become important in certain assays, such as those that have a wash and soak cycle requiring an accurate and small volume of wash liquid. If the error allowed in such soak volumes is only ± 10 µL out of 230 µL, it is easily possible for the rotor vertical run-out to create an error of as much as ± 5 µL, which is 50% of the allowed error. The smaller the volume that is used, the smaller the error volumes that are possible. This use of 50% of the allowed error leaves too little error tolerance for other factors in the analyzer.

Therefore, the problem is to ascertain empty and full heights of each container on a rotor, independently of any fixed reference site not associated with the rotor. Particularly this has been a problem when operating with small volumes of liquid which in turn are preferred for reduction in overall costs.

In accord with one aspect of the invention, the problem is solved by a method of determining the volume of liquid added to a cup-like reaction vessel of known dimensions as defined in claim 1.

In accord with yet another aspect of the invention, the problem is solved by an apparatus for determining the volume of liquid added to a cup-like reaction vessel of known dimensions as defined in claim 3.

Accordingly, it is an advantageous feature of the invention that the liquid volume of each container on a rotor can be accurately ascertained, even in the presence of an unpredictable vertical run-out in the rotor.

It is a related advantageous feature of the invention that such volume can be ascertained apart from the probe that is used to fill the volume, as a check on the reliability of that probe.

The invention is best understood in conjunction with the attached drawings in which:
Fig. 1 is a partially schematic, fragmentary isometric view of the incubator of an analyzer not forming part of the invention;
Fig. 2 is a fragmentary isometric view similar to Fig. 1, enlarged to show more details;
Fig. 3 is a fragmentary elevational view in section of a rotor not forming part of the invention;
Fig. 4 is a fragmentary elevational view similar to that of Fig. 3, also not forming part of the invention; and
Figs. 5 and 6 are views similar to that of Fig. 4 of an embodiment of the invention.

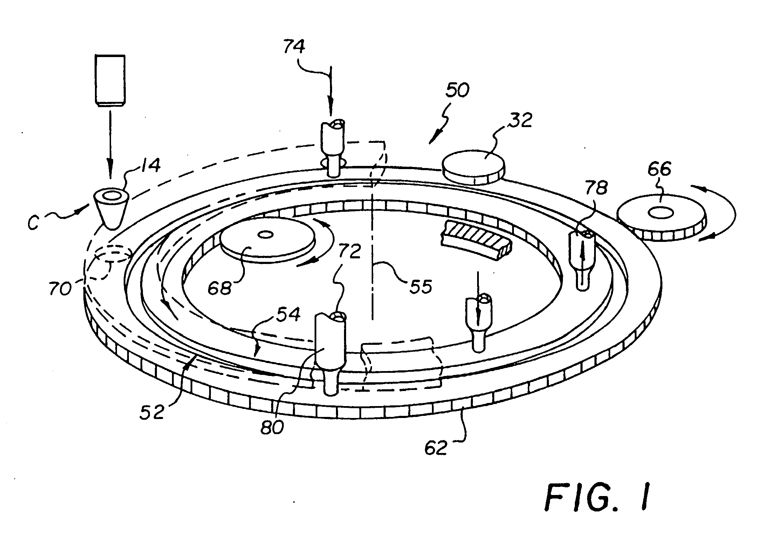

The invention is described in connection with analyzers not forming part of the invention (figures 1 to 4) in which the reaction vessel is a cup, the movable support is a rotor, the air pressure for the sensing comes from a pump, and the critical station along the rotor for vertical height determination is a cup-wash station. In addition, the invention is applicable for vessels other than cups; movable supports of any kind susceptible to a vertical run-out; sources of air pressure other than pumps (for example, a source of inexhaustible constant pressure). As noted, the invention is particularly useful when using small liquid soak volumes. As used herein, "small volume" means, no greater than 250 µL.

Figure 1 shows an analyzer, which does not form part of the invention, featuring an incubator 50 using at least one rotor 52 or 54 to support cups or vessels C therein at apertures 70, delivered from a cuvette-loading station 14. It is used with respect to the innermost rotor 54 at or adjacent to wash probe 78, as described hereinafter. Rotors 52 and 54 are driven by gears 66 and 68, respectively, around axis 55, and various other steps in the analysis of the sample in vessels C are performed at the other stations 74, 80, and luminometer 32, all as described in detail in, for example, US-A-5,244,633.

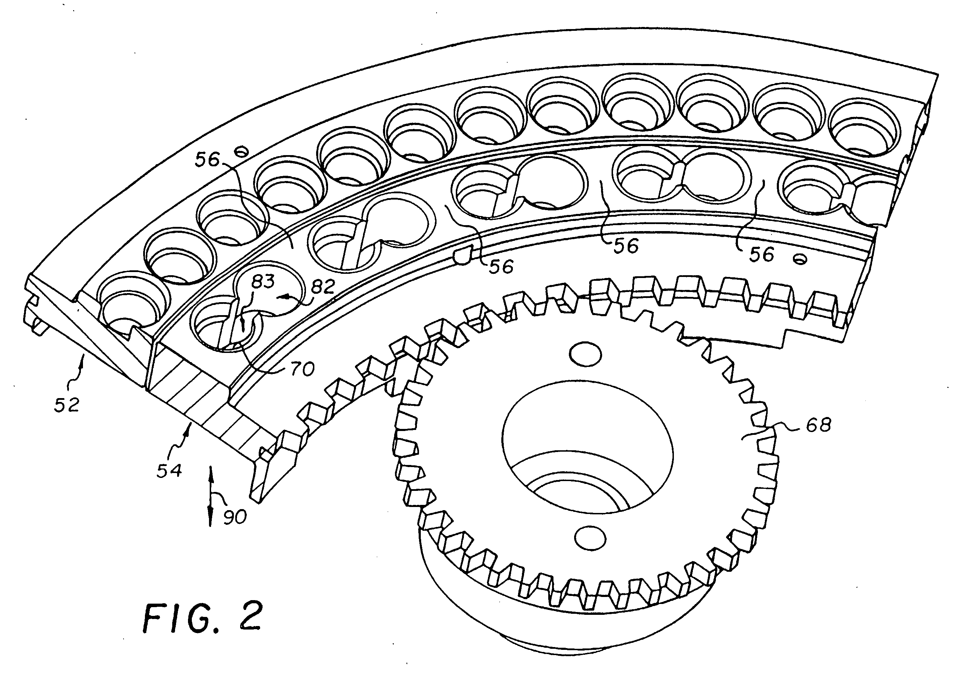

Rotor 54 is as shown in Fig. 2 and as described in US-A-5,456,883, wherein each vessel-holding aperture 70 intersects a paired dump aperture 82 with a narrow passageway 83 connecting them. (Only one such pair is labeled, for clarity.) Each pair of apertures 70 and 82 is spaced away from the adjacent pair by a generally horizontal top surface 56, the utility of which will become apparent.

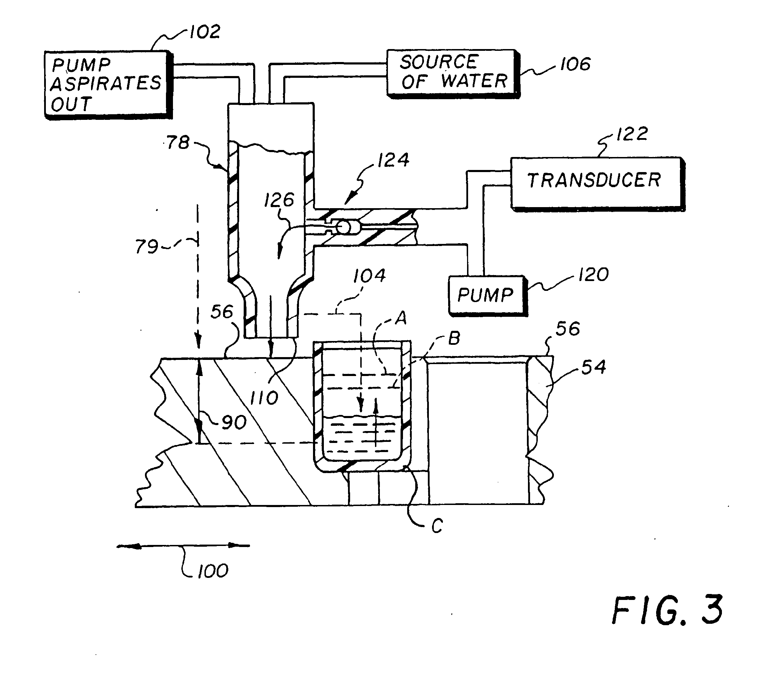

The problem to be overcome by the invention is the vertical run-out of rotor 54 as it is rotated by gear 68. Such vertical run-out produces Z-axis vertical deviations, shown as double arrow 90. This vertical run-out becomes critical at certain critical stations disposed around the circumference of rotor 54, of which vessel-wash probe 78 is exemplary. As shown in Fig. 3, when a vessel C is rotated, arrow 100, into position under probe 78, the liquid already therein, including patient sample, is aspirated out by a pump 102, after the probe has been lowered into the vessel, arrow 104. Thereafter, wash water is supplied from reservoir 106 at least once, and a final wash is dispensed to an excessive level "A" in a rough dispensing step. A fine adjustment is then used in pump 102 to aspirate out to a known fixed level B, providing an accurate volume of soak liquid, for example, 230 µL, for soaking the reactive complexes inside the vessel C for an incubation period.

However, such accurate volume presumes that there has been zero vertical run-out, arrow 90. Since, however, this is not the case, positioning the exterior surface 110 of probe 78 at level "B" will not ensure an accurate predetermined soak volume, since the height of the vessel C when empty is no longer predetermined.

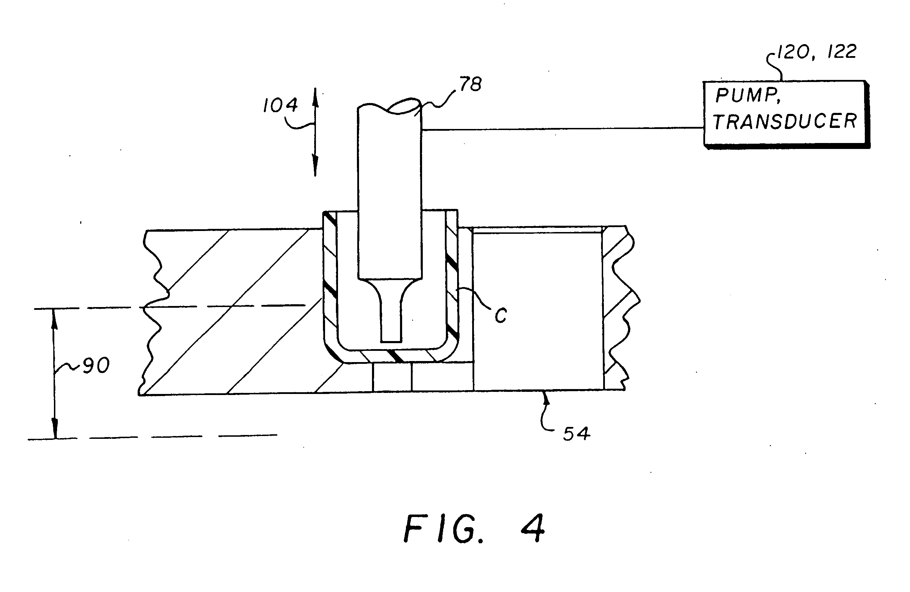

In accordance with the invention, this is corrected by providing a sensing probe and step wherein the empty or "tare" height of each vessel in the rotor, while in an aperture 70, is determined at the time of machine set-up, as the rotor rotates past a critical station (in this case, the vessel-wash station 78). This is done by sensing a reference surface of the vessel. That reference surface comprises either horizontal surface 56 immediately adjacent one or both sides of each vessel, as shown in Fig. 3, or the bottom of the empty vessel C itself as shown in Fig. 4, that is, a surface coincident with the vessel. That is, vessel-wash probe 78 is outfitted with a source of air pressure 120 and a pressure transducer 122, connected via a one-way valve 124 that allows air flow in the direction of arrow 126, but no liquid flow opposite to arrow 126 back to source 120 or transducer 122. As probe 78 lowers towards surface 56, arrow 79, at a certain minimum distance from the surface the build-up of air will exceed a threshold value in transducer 122, indicating the presence of surface 56 at a known height, recorded in the analyzer's computer. The downward advance of probe 78 ceases at this point. This technique is more fully described in, for example, US-A-4,794,085, wherein the surface detected is a liquid. As indicated, the height of surface 56 at either side of vessel C can be used, or an average of the two. The process is then repeated by rotating rotor 54, arrow 100, until the next vessel C (not shown) is brought into position adjacent probe 78, and the tare height-sensing process is then repeated. This is done for all the vessels at all the apertures 70, Fig. 2, in the entire annulus of rotor 54, because the amount of vertical run-out 90 at station 78 may vary for each such aperture 70. The computer, of course registers what the tare height is for each such location, to adjust the depth the probe 78 must extend during vessel washing to provide an effective location B for tip surface 110 that gives the same volume of remaining soak liquid, regardless of the vertical run-out 90.

As shown in Fig. 4, probe 78 can extend down to the bottom of empty vessel C to detect the reference surface of the vessel, in a manner otherwise identical to the procedure described above for Fig. 3.

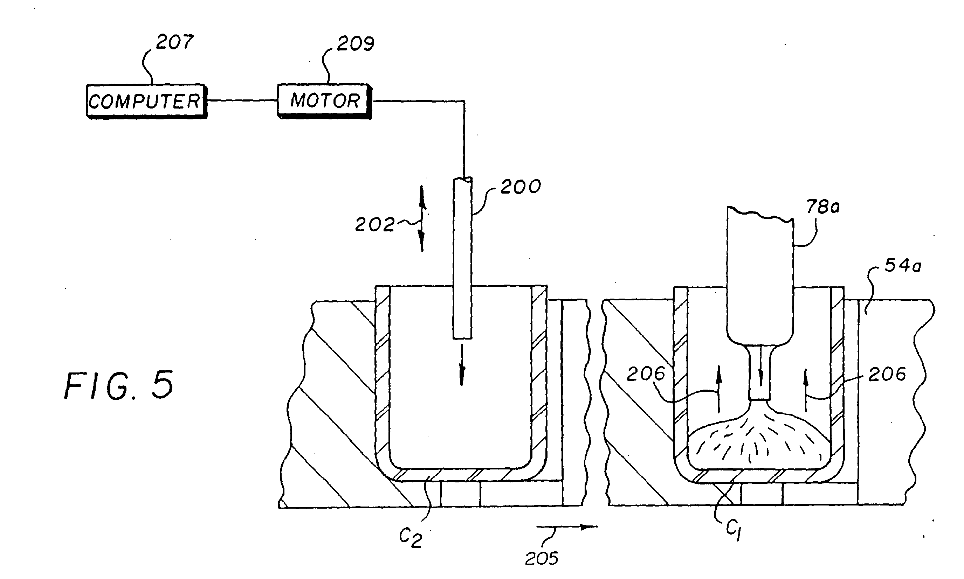

Fig. 5 illustrates several features of the invention. For one thing, a sensing probe independent of vessel wash probe 78 is used to determine the tare height, especially of the bottom of each empty vessel. Parts similar to those previously described bear the same reference numeral, to which the distinguishing suffix "a" is appended. It will be appreciated that this embodiment assumes the analyzer configuration is such that enough room is provided for the sensing probe to operate adjacent to the vessel-washing probe, by moving down into and up out of each vessel.

Thus, Fig. 5, rotor 54a carries vessels C₁, C₂, ... Cₙ past a critical station, preferably the vessel aspirate-and-wash station using probe 78a, as before. However, probe 78a has no air pressure source or transducer connected to it. Instead, such are connected in the same way (not shown) to a sensor 200, which is a simple tube, mounted for vertical movement, arrow 202, much as is mounted probe 78a for vertical movement. (Preferably, both probe 78a and sensor 200 also pivot out away from vertical alignment with rotor 54a, when not in use, for example, via conventional mechanisms such as motor 209 and any suitable linkage, for sensor 200.) The air delivered by sensor 200, arrow 204 is sufficient to detect the tare height of the empty vessel underneath it, for all such vessels C₁, C₂ ... Cₙ, during machine set-up, thus registering in the computer (for example, computer 207) the vertical run-out effect for that portion of the rotor supporting that particular vessel. Because of the close proximity to probe 78a, any vessel thereafter, arrow 205, can be moved so as to be washed, arrows 206, for example, vessel C₁ as shown, relying on the tare height determined by sensor 200 to cause an accurate soak volume to be left behind by probe 78a.

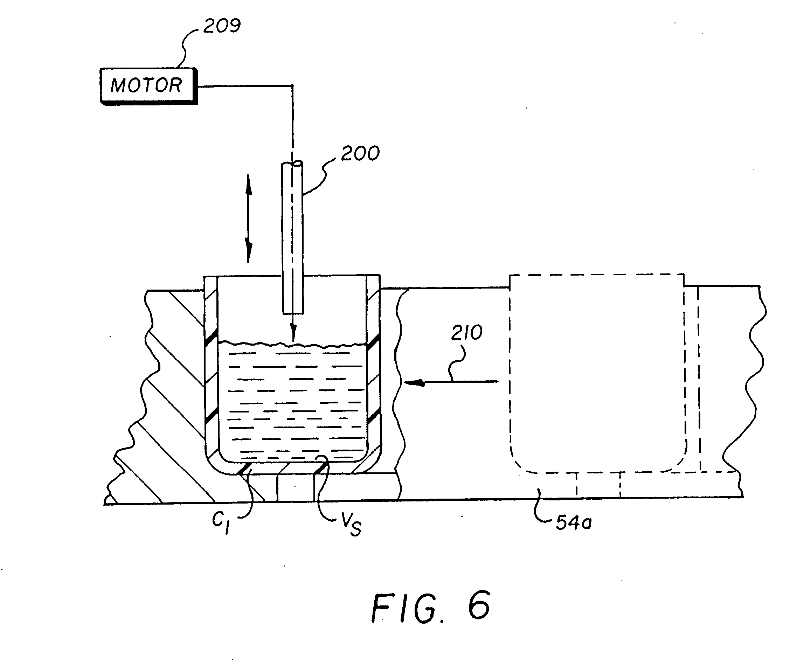

The sensor of Fig. 5 can have an alternative, independent usage. That is, it is possible for probe 78a to also include its source of air pressure and transducer, as well as sensor 200. Each air pressure source and transducer can be separate from the other, or the same source and transducer can be used for both. In either case, the function of sensor 200 is to provide an independent check on the performance of probe 78a in its aspiration and re-soaking of each vessel. In such a case, sensor 200 need not be located anywhere near probe 78a (not shown) around the rotor circumference. In such a procedure, sensor 200 determines the tare height of each empty vessel during machine set-up, Fig. 5, as described above. Then, Fig. 6, after probe 78a has aspirated and left behind soak volume Vs, the pertinent vessel (here C₁) is moved back, arrow 210 to sensor 200 which then moves down to sense the height of the liquid present, by sensing the air-liquid interface. The tare height originally determined is subtracted from the just-sensed liquid height, and the analyzer computer converts the differences in heights to a volume measurement for that vessel C₁, given that the dimensions of the vessel are pre-known and pre-entered into the computer. This determined volume measurement is then compared with the "prescribed" volume pre-set for the analyzer, to be certain it is within acceptable variations of that prescribed volume. If it is not, then an error flag is created to indicate that probe 78a is not functioning properly.

The reason for using sensor 200 in such a case to determine the liquid height, instead of probe 78a which also has that capability, is that it is not proper protocol to test the performance of an analyzer part (probe 78a) by using that very part being verified.

In all instances of the embodiments described above, the probe or sensor never contacts the surface that is to be detected, thus avoiding the risk of contamination.

## Claims

1. A method of determining the volume of liquid added to a cup-like reaction vessels (c) of known dimensions, comprising:
a) positioning the vessel (c) in a movable support (54);
b) moving the support (54) and vessel (c) until the vessel (c) is at a sensing station;
c) sensing the vertical position of the bottom inside surface of the vessel (c) at the sensing station by delivering air from a sensor (200) fluidly connected to a pressure transducer (122), and by lowering the sensor (200) towards the bottom inside surface of the vessel (c) until the pressure transducer (122) detects a pressure change when the air delivered from the sensor (200) encounters said bottom inside surface of the vessel (c);
d) moving the support (54) and vessel(c) to a liquid-adding station;
e) adding a volume of liquid to the vessel (c) at the liquid-adding station; leaving an air-liquid interface at the top of the volume;
f) moving the support (54) and vessel(c) until the vessel (c) is returned to the sensing station;
g) sensing the vertical position of the air-liquid interface at the sensing station by delivering air from the sensor (200), and by lowering the sensor (200) towards the air-liquid interface until the pressure transducer (122) detects a pressure change when the air delivered from the sensor (200) encounters said air-liquid interface; and
h) converting the sensed vertical positions of the bottom surface and the air-liquid interface of the vessel (c) into a volume measurement of the liquid volume.

2. A method as defined in claim 1, wherein the sensor (200) is an air nozzle 200) fluidly connected to a source of pressurized air (120) and to the pressure transducer (122).

3. Apparatus for determining the volume of liquid added to a cup-like reaction vessel (c) of known dimensions, comprising:
a rotor support (54) with openings (70, 82) therein that mount a plurality of cup-like reaction vessels (c);
a plurality of stations disposed around the circumference of the rotor (54), including a wash station; and
a motor (68) that rotates the rotor (54) and vessel (c) between the stations;
**characterized in that** the apparatus further includes a sensor (200) independent of the wash station and which is disposed at another position on the circumference of said rotor (54); the sensor (200) comprising a source of air pressure (120), a probe for delivering the air pressure downwardly into one of the vessels (c), and a pressure transducer (122) fluidly connected to the probe and arranged to sense a change in air pressure due to the vicinity of an air-solid or air-liquid interface; wherein the sensor (200) is arranged to sense the height of an air-solid and of an air-liquid interface of the vessel (c) without contacting the interface by lowering the sensor (200) until the pressure transducer (122) senses a change in the air pressure due to the vicinity of an air-solid of an air-liquid interface;
means (209) arranged to pivote the sensor (200) over and down into a vessel (c) on the rotor (54); and
a computer (207) arranged to record said measured heights of an air-solid interface of the vessel (c) and of an air-liquid interface of the vessel (c) sensed by the sensor (200) and to convert said heights into a measurement of the volume of the liquid in the vessel (c).

## Patentansprüche

1. Verfahren zum Bestimmen des einem tassenartigen Reaktionsgefäß (c) bekannter Ausmaße zugeführten Flüssigkeitsvolumens, bei dem:
a) das Reaktionsgefäß (c) in einem bewegbaren Träger (54) angeordnet wird;
b) der Träger (54) und das Reaktionsgefäß (c) bewegt werden, bis das Reaktionsgef"aß bei einer Sensierstation ist;
c) die vertikale Position der Bodeninnenfläche des Reaktionsgefäßes (c) an der Sensierstation durch Zufuhr von Luft von einem mit einem Druckwandler (122) fluidal verbundenen Sensor (200) und durch Absenken des Sensors (200) in Richtung der Bodeninnenfläche des Reaktionsgefäßes (c) sensiert wird, bis der Druckwandler (122) eine Druckänderung erfaßt, wenn die von dem Sensor (200) zugeführte Luft auf die Bodeninnenfläche des Reaktionsgefäßes (c) trifft;
d) der Träger (54) und das Reaktionsgefäß (c) zu einer Flüssigkeitszuftüustation bewegt werden;
e) ein Flüssigkeitsvolumen in das Reaktionsgefäß (c) an der Flüssigkeitszuführstation zugeführt wird, wobei eine Luft-Flüssigkeits-Grenzfläche am oberen Ende des Volumens bereitgestellt wird;
f) der Träger (54) und das Reaktionsgefäß (c) bewegt werden, bis das Reaktionsgefäß (c) zur Meßstation zurückgekehrt ist;
g) die vertikale Position der Luft-Flüssigkeits-Crrenzfläche an der Meßstation durch Zuführen von Luft von dem Sensor (200) und durch Absenken des Sensors (200) in Richtung der Luft-Flüssigkeits-Grenzfläche sensiert wird, bis der Druckwandel (122) eine Druckänderung erfaßt, wenn die von dem Sensor (200) zugeführte Luft auf die Luft-Flüssigkeits-Grenzfläche stößt;
h) die sensierte vertikale Position der Bodeninnenfläche und der Luft-Flüssigkeits-Grenzfläche des Reaktionsgefäßes (c) in eine Volumenmessung des Flüssigkeitsvolumens umgewandelt wird.

2. Verfahren nach Anspruch 1, wobei der Sensor (200) eine strömungsmäßig mit einer Druckluftquelle (220) und mit dem Druckwandler (122) verbundene Luftdüse (200) ist.

3. Vorrichtung zum Bestimmen des einem tassenartigen Reaktionsgefäß (c) bekannter Ausmaße zugeführten Flüssigkeitsvolumens umfassend:
einen Rotorträger (54) mit darin angeordneten Öffnungen (70, 82), die mehrere tassenartige Reaktionsgefäße (c) tragen;
eine Mehrzahl von Stationen, die um den Umfang des Rotors (54) angeordnet sind, einschließlich eine Waschstation; und
einen Motor (68), der den Rotozträger (54) und die Reaktionsgefäße (c) zwischen den Stationen dreht;
**dadurch gekennzeichnet, daß** die Vorrichtung ferner einen von der Waschstation unabhängigen Sensor (200), der an einer anderen Position am Umfang des Rotors (54) angeordnet ist, wobei der Sensor (200) eine Druckluftquelle (120), eine Sonde zum Zuführen von Luftdruck nach unten in eines der Reaktionsgefäße (c) und einen Druckwandler (122) umfaßt, der mit der Sonde fluidal verbunden ist und zum Sensieren einer Änderung von Luftdruck aufgrund der Nachbarschaft zu einer Luft-Festkörper-Grenzfläche oder einer Luft-Flüssigkeits-Grenzfläche angeordnet ist; wobei der Sensor (200) zum Sensieren der Höhe einer Luft-Feststoff- und einer Luft-Flüssigkeits-Grenzfläche des Reaktionsgefäßes (c) ohne Berührung der Grenzfläche durch Absenken des Sensors (200) angeordnet ist, bis der Druckwandler (122) eine Änderung des Luftdruckes aufgrund der Nachbarschaft zu einer Luft-Feststoff- oder einer Luft-Flüssigkeits-Grenzfläche sensiert;
eine auf dem Rotorträger (54) angeordnete Einrichtung (209) zum Drehen des Sensors (200) über und in das Reaktionsgefäß (c); und
einen Computer (207) umfaßt, der dazu eingerichtet ist, die sensierten Höhen einer Luft-Feststoff-Grenzfläche des Reaktionsgefäßes (c) und einer Luft-Flüssigkeits-Grenzfläche des Reaktionsgefäßes (c), die durch den Sensor (200) gemessen sind, zu speichern und um die Höhen in eine Volumenmessung der Flüssigkeit in dem Reaktionsgefäß (c) umzuwandeln.

## Revendications

1. Méthode de détermination du volume de liquide ajouté dans un récipient à réaction en forme de gobelet (c) de dimensions connues, comprenant les étapes consistant à :
a) positionner le récipient (c) sur un support mobile (54);
b) déplacer le support (54) et le récipient (c) jusqu'à ce que le récipient (c) soit au niveau d'une station de détection ;
c) détecter la position verticale de la surface inférieure interne du récipient (c) au niveau de la station de détection en émettant de l'air à partir d'un capteur (200) raccordé de manière fluide à un transducteur de pression (122), et en abaissant le capteur (200) en direction de la surface inférieure interne du récipient (c) jusqu'à ce que le transducteur de pression (122) détecte un changement de pression lorsque l'air émis à partir du capteur (200) rencontre ladite surface inférieure interne du récipient (c) ;
d) déplacer le support (54) et le récipient (c) vers une station d'ajout de liquide ;
e) ajouter un volume de liquide dans le récipient (c) au niveau de la station d'ajout de liquide laissant une interface air-liquide au sommet du volume ;
f) déplacer le support (54) et le récipient (c) jusqu'à ce que le récipient (c) retourne à la station de détection ;
g) détecter la position verticale de l'interface air-liquide au niveau de la station de détection en émettant de l'air à partir du capteur (200), et en abaissant le capteur (200) vers l'interface air-liquide jusqu'à ce que le transducteur de pression (122) détecte un changement de pression lorsque l'air émis à partir du capteur (200) rencontre ladite interface air-liquide ; et
h) convertir les positions verticales détectées de la surface inférieure et de l'interface air-liquide du récipient (c) en une mesure de volume du volume de liquide.

2. Méthode selon la revendication 1, dans laquelle le capteur (200) est une buse d'air (200) raccordée de manière fluide à une source d'air pressurisé (120) et au transducteur de pression (122).

3. Appareil de détermination du volume de liquide ajouté dans un récipient à réaction en forme de gobelet (c) de dimensions connues, comprenant :
un support de rotor (54) muni d'ouvertures (70, 82) à l'intérieur supportant une pluralité de récipients à réaction en forme de gobelets (c) ;
une pluralité de stations disposées autour de la circonférence du rotor (54), comprenant une station de lavage ; et
un moteur (68) permettant au rotor (54) et au récipient (c) de se déplacer entre les stations ;
**caractérisé en ce que** l'appareil comprend en outre un capteur (200) indépendant de la station de lavage et qui est disposé à un autre emplacement de la circonférence dudit rotor (54) *;* le capteur (200) comprenant une source de pression d'air (120), une sonde pour délivrer la pression d'air vers le bas dans l'un des récipients (c), et un transducteur de pression (122) raccordé de manière fluide à la sonde et disposé de manière à détecter un changement dans la pression de l'air dû au voisinage d'une interface air-solide ou air-liquide ; dans lequel le capteur (200) est disposé de manière à détecter la hauteur d'une interface air-solide et d'une interface air-liquide du récipient (c) sans entrer en contact avec l'interface en abaissant le capteur (200) jusqu'à ce que le transducteur de pression (122) détecte un changement dans la pression de l'air dû au voisinage d'une interface air-solide ou d'une interface air-liquide ;
un dispositif (209) disposé de manière à faire pivoter le capteur (200) vers le haut et vers le bas dans un récipient (c) sur le rotor (54) ; et
un ordinateur (207) disposé de manière à enregistrer lesdites hauteurs mesurées d'une interface air-solide du récipient (c) et d'une interface air-liquide du récipient (c) détectées par le capteur (200) et à convertir lesdites hauteurs en une mesure du volume du liquide dans le récipient (c).
